# EUROPEAN PATENT SPECIFICATION

(11) **EP 3 765 917 B1**
(45) Date of publication and mention of the grant of the patent: **29.04.2026**
(21) Application number: 18932000.5
(22) Date of filing: 22.11.2018
(51) Int. Cl.: G03G 21/16, G03G 15/08, G03G 21/18

(54) **TONER REFILL CARTRIDGE CONNECTED TO MAIN BODY THROUGH INTERFACE BETWEEN DEVELOPMENT CARTRIDGE AND MAIN BODY**
TONERNACHFÜLLKASSETTE, DIE ÜBER EINE SCHNITTSTELLE ZWISCHEN ENTWICKLUNGSKARTUSCHE UND HAUPTKÖRPER MIT DEM HAUPTKÖRPER VERBUNDEN IST
CARTOUCHE DE RECHARGE DE TONER RELIÉE À UN CORPS PRINCIPAL PAR L'INTERMÉDIAIRE D'UNE INTERFACE ENTRE UNE CARTOUCHE DE DÉVELOPPEMENT ET UN CORPS PRINCIPAL

(30) Priority: 30.08.2018 KR 20180102566
(43) Date of publication of application: 20.01.2021
(73) Proprietor: Hewlett-Packard Development Company, L.P., Spring TX 77389 (US)
(72) Inventor: LEE, Seung Sup, Bundang-gu, Seongnam-si, Gyeonggi-do (KR); NOH, Jin Woo, Yongin-si, Gyeonggi-do 16848 (KR); LEE, Young Ju, Suwon-si, Gyeonggi-do 16670 (KR)
(74) Representative: Hoffmann Eitle
(86) International application number: PCT/KR2018/014409
(87) International publication number: WO 2020/045747

(56) References cited:
- EP-A1- 3 717 969
- EP-A2- 1 041 455
- JP-A- 2001 228 691
- JP-A- 2017 090 692
- US-A1- 2007 230 999
- US-A1- 2011 217 067
- US-A1- 2016 291 521
- US-B1- 6 212 338
- US-B1- 6 249 654

## Description

### [Background Art]

An image forming apparatus using an electrophotographic method supplies toner to an electrostatic latent image formed on a photoreceptor to form a visible toner image on the photoconductor, transfers the toner image to a printing medium via an intermediate transfer medium or directly to a printing medium, and then fixes the transferred toner image on the printing medium.

A development cartridge accommodates toner and supplies the toner to an electrostatic latent image formed on the photoreceptor to form a visible toner image. When the toner accommodated in the development cartridge is exhausted, the development cartridge is removed from a main body of the image forming apparatus and a new development cartridge may be mounted on the main body of the image forming apparatus. EP 1 041 455 A2 describes a detection circuit that transmits a detection signal to a CPU of an image forming device, as it detects a toner bottle being attached in a first position in the image forming device in an electrical, mechanical, or optical manner.

### [Disclosure]

### [Description of Drawings]

FIG. 1 is an external perspective view of an example of an electrophotographic image forming apparatus;
FIG. 2 is a configuration diagram of the example of the electrophotographic image forming apparatus shown in FIG. 1;
FIG. 3 is a perspective view of an example of a development cartridge adopted in the example of the electrophotographic image forming apparatus shown in FIG. 1;
FIG. 4 is a partially exploded perspective view of an example of a toner refill cartridge;
FIGS. 5A and 5B are views of a toner refill cartridge accessing a toner refilling portion from outside a main body of an image forming apparatus through a communicating portion;
FIG. 6 is a perspective view of an example of a toner refilling portion equipped with a toner refill cartridge;
FIG. 7 is a view for explaining electrical connection between a connection interface of a toner refill cartridge and a first connector of a toner refilling portion;
FIG. 8 is a view for explaining a connection structure between a toner refill cartridge, a toner refilling portion in a development cartridge, and a controller; and
FIG. 9 is a view for explaining information transmission between a toner refill cartridge, a toner refilling portion, and a controller when the toner refill cartridge is mounted on the toner refilling portion in a development cartridge.

### [Mode for Invention]

Reference will now be made in detail to examples, examples of which are illustrated in the accompanying drawings. The same reference numerals are used to denote the same elements, and repeated descriptions thereof will be omitted.

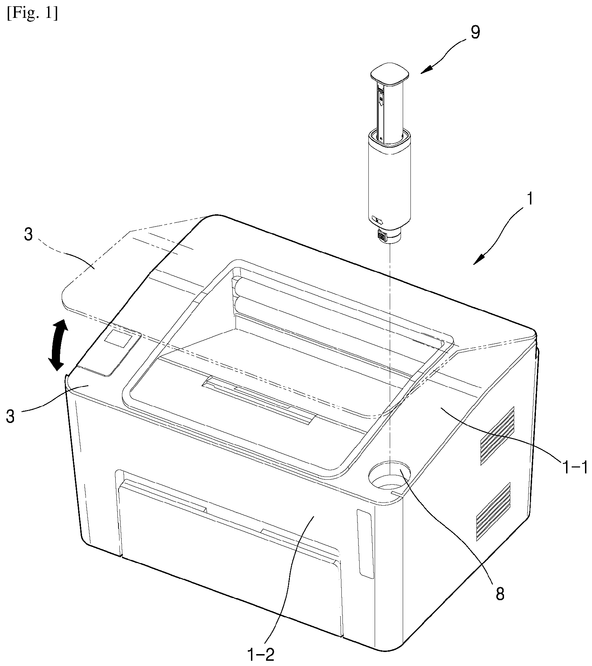

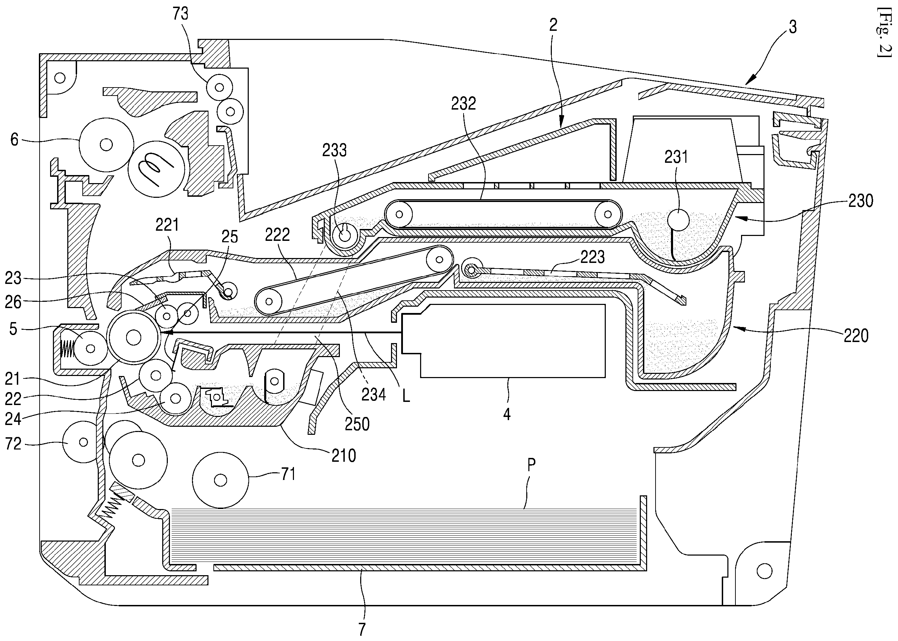

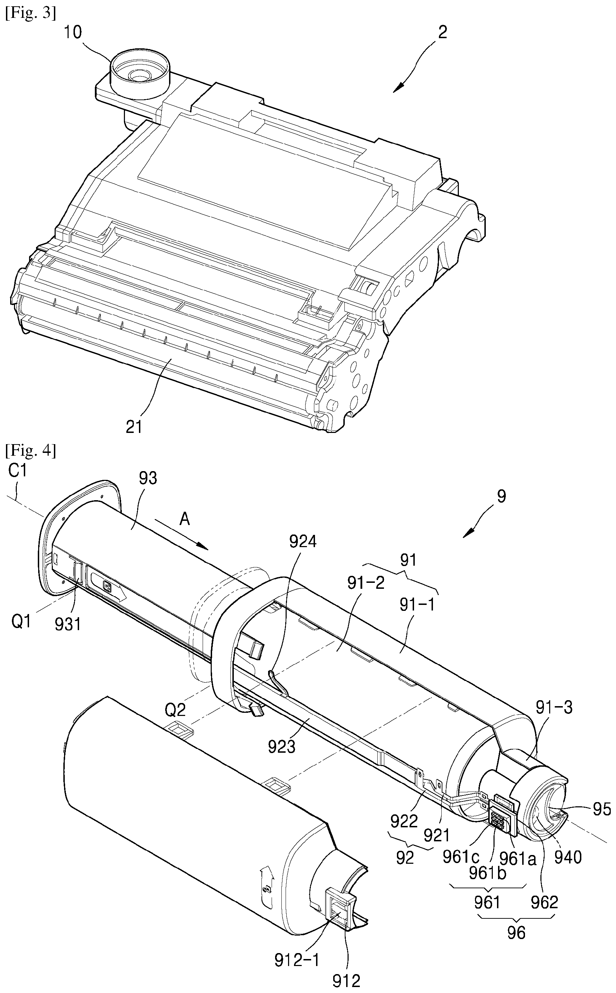

FIG. 1 is an external perspective view of an example of an electrophotographic image forming apparatus. FIG. 2 is a configuration diagram of the example of the electrophotographic image forming apparatus shown in FIG. 1. FIG. 3 is a perspective view of an example of a development cartridge adopted in the example of the electrophotographic image forming apparatus shown in FIG. 1.

Referring to FIGS. 1 to 3, the image forming apparatus includes a main body 1 and may include a development cartridge 2 in the form of a cartridge removable from the main body 1. The main body 1 may include a door 3. The door 3 may open and close a portion of the main body 1. FIG. 1 shows the door 3 for opening an upper portion of the main body 1, but a door for opening a side or the whole of the main body 1 may be employed if necessary. A user may open the door 3 and mount or remove the development cartridge 2 on/from the main body 1. The main body 1 includes a communicating portion 8 such that the development cartridge 2 accesses from outside the main body 1 a toner refilling portion 10 in a state in which the development cartridge 2 is mounted on the main body 1. The communicating portion 8 may be provided at a position close to a front surface 1-2 of the main body 1. Since the front surface 1-2 faces the user, the user may easily access the communication portion 8. Therefore, a toner refilling operation using a toner refill cartridge 9 may be easily performed through the communicating portion 8. The communicating portion 8 may be provided on an upper surface 1-1 of the main body 1. The toner refilling portion 10 may be provided under the communicating portion 8. The communicating portion 8 and the toner refilling portion 10 may be aligned in a vertical direction. The toner refill cartridge 9 may access the toner refilling portion 10 from above the main body 1 through the communicating portion 8.

A photosensitive drum 21 may include a cylindrical metal pipe and a photosensitive layer with photoconductivity formed on the periphery thereof, as an example of a photoconductor on which an electrostatic latent image is provided. A charging roller 23 is an example of a charger that charges a surface of the photosensitive drum 21 to a uniform potential. A charging bias voltage may be applied to the charging roller 23. A corona charger (not shown) may also be used instead of the charging roller 23. A developing roller 22 may supply toner to an electrostatic latent image formed on the surface of the photosensitive drum 21 to develop the electrostatic latent image.

A supply roller 24 may attach the toner to the developing roller 22. A supply bias voltage may be applied to attach the toner to the supply roller 24 with the developing roller 22. A regulating member 25 may regulate the amount of toner attached to a surface of the developing roller 22. The regulating member 25 may be, for example, a regulating blade whose tip is brought into contact with the developing roller 22 at a certain pressure. A cleaning member 26 may remove residual toner and foreign materials from the surface of the photosensitive drum 21 before charging. The cleaning member 26 may be, for example, a cleaning blade whose tip is in contact with the surface of the photosensitive drum 21. Hereinafter, the foreign materials removed from the surface of the photosensitive drum 21 are referred to as waste toner.

An optical scanner 4 may scan the surface of the photosensitive drum 21 charged to a uniform potential with light modulated according to image information. As the optical scanner 4, for example, a laser scanning unit (LSU) may be employed in which light irradiated from a laser diode is deflected in a main scanning direction by using a polygon mirror to scan the photosensitive drum 21.

A transfer roller 5 is an example of a transfer unit which is located opposite the photosensitive drum 21 to form a transfer nip. A transfer bias voltage for transferring a toner image developed on the surface of the photosensitive drum 21 to a print medium P may be applied to the transfer roller 5. A corona transferor may be used instead of the transfer roller 5.

The toner image transferred to the surface of the printing medium P by the transfer roller 5 may be maintained on a surface of the printing medium P by electrostatic attraction. A fixing unit 6 may form a permanent print image on the print medium P by fixing the toner image on the print medium P by applying heat and pressure.

The development cartridge 2 according to the example may include a developing portion 210 including the photosensitive drum 21 and the developing roller 22, a waste toner accommodating portion 220 in which waste toner removed from the photosensitive drum 21 is accommodated, and a toner accommodating portion 230 connected to the developing portion and accommodating toner. In order to refill toner in the toner accommodating portion 230, the development cartridge 2 may include the toner refilling portion 10 connected to the toner accommodating portion 230. The toner refilling portion 10 provides an interface between the toner refill cartridge 9 and the development cartridge 2, which will be described later below. The development cartridge 2 may be an integrated development cartridge including the developing portion 210, the waste toner accommodating portion 220, the toner accommodating portion 230, and the toner refilling portion 10.

A portion of an outer periphery of the photosensitive drum 21 may be exposed to an outside of the housing. The transfer roller 5 may contact the exposed portion of the photosensitive drum 21 to form the transfer nip. The developing portion 210 may include one or more carrying members for carrying toner toward the developing roller 22. The carrying member may also stir toner to charge the toner to a certain potential.

The waste toner accommodating portion 220 may be located above the developing portion 210. The waste toner accommodating portion 220 may be spaced upward from the developing portion 210 to form a light path 250 therebetween. Waste toner removed from the surface of the photosensitive drum 21 by the cleaning member 26 may be accommodated in the waste toner accommodating portion 220. The waste toner removed from the surface of the photosensitive drum 21 may be transferred to the inside of the waste toner accommodating portion 220 by one or more transfer members 221, 222, and 223. The shape and the number of a waste toner transfer member are not limited. An appropriate number of waste toner transfer members may be provided at appropriate positions to effectively disperse waste toner in the waste toner accommodating portion 220 considering a volume or a shape of the waste toner accommodating portion 220.

The toner accommodating portion 230 may be connected to the toner refilling portion 10 to accommodate toner. The toner accommodating portion 230 may be connected to the developing portion 210 by a toner supply 234 as shown by dashed lines in FIG. 2. As shown in FIG. 2, the toner supply 234 may be connected to the developing portion 210 through the waste toner accommodating portion 220 in the vertical direction. The toner supply 234 may be located outside an effective width of exposure light L so as not to interfere with the exposure light L scanned in a main scanning direction by the optical scanner 4.

The toner accommodating portion 230 may include one or more toner supply members 231, 232, and 233 for supplying toner to the developing portion 210 through the toner supply 234. The shape and the number of toner supply members are not limited. An appropriate number of toner supply members may be provided at appropriate positions in the toner accommodating portion 230 to effectively supply toner to the developing portion 210 considering a volume or a shape of the toner accommodating portion 230. The toner supply member 233 may transfer toner to the toner supply 234.

An image forming process according to the above-described configuration will be briefly described. A charging bias voltage is applied to the charging roller 23, and the photosensitive drum 21 may be charged to a uniform potential. The optical scanner 4 may scan the photosensitive drum 21 with light modulated corresponding to image information to form an electrostatic latent image on the surface of the photosensitive drum 21. The supply roller 24 may attach toner to the surface of the developing roller 22. The regulating member 25 may form a toner layer having a uniform thickness on the surface of the developing roller 22. A developing bias voltage may be applied to the developing roller 22. Toner carried to the developing nip as the developing roller 22 is rotated is moved and attached to the electrostatic latent image formed on the surface of the photosensitive drum 21 by a developing bias voltage so that a visible toner image may be formed on the surface of the photosensitive drum 21. The print medium P drawn out from a loading unit 7 by a pickup roller 71 may be transferred to the transfer nip where the transfer roller 5 and the photosensitive drum 21 face each other by a feed roller 72. When a transfer bias voltage is applied to the transfer roller 5, the toner image may be transferred to the print medium P by electrostatic attraction. The toner image transferred to the printing medium P is fixed to the printing medium P by receiving heat and pressure from the fixing unit 6, whereby printing may be completed. The print medium P is discharged by a discharge roller 73. Toner remaining on the surface of the photosensitive drum 21 without being transferred to the print medium P may be removed by the cleaning member 26.

According to an example image forming apparatus, the development cartridge 2 may include the toner refilling portion 10 in order to refill toner in the development cartridge 2 in a state in which the development cartridge 2 is mounted on the main body 1 without removing the development cartridge 2 from the main body 1. The toner refilling portion 10 may be integrally formed with the development cartridge 2 and may be detached from the main body 1 together with the development cartridge 2.

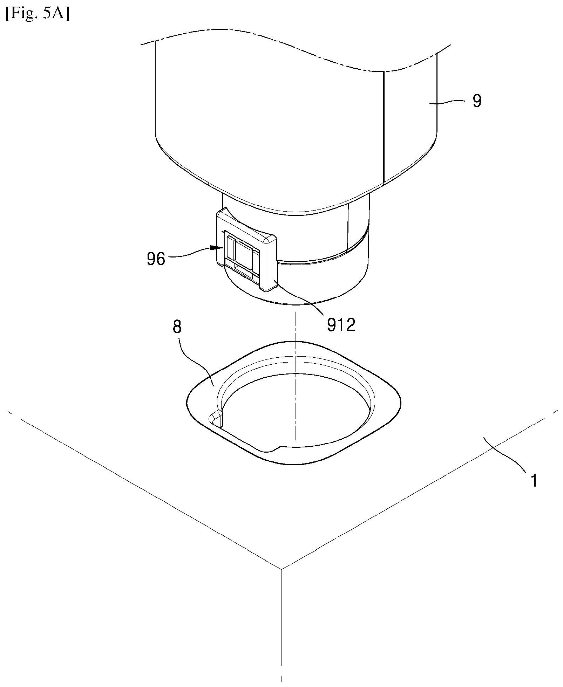

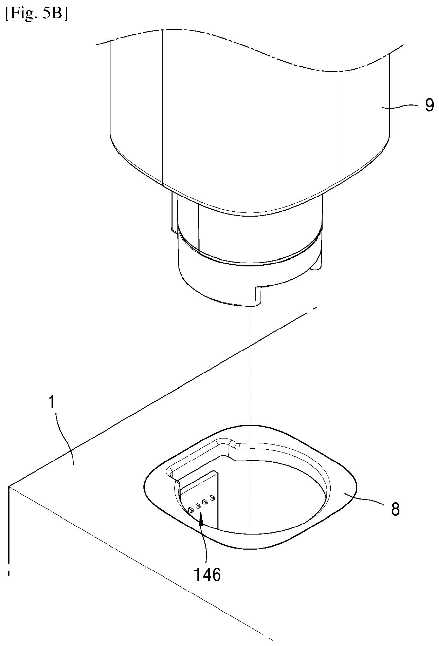

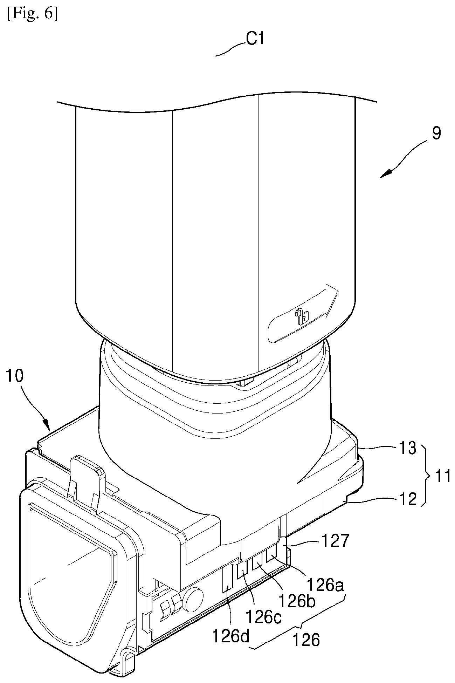

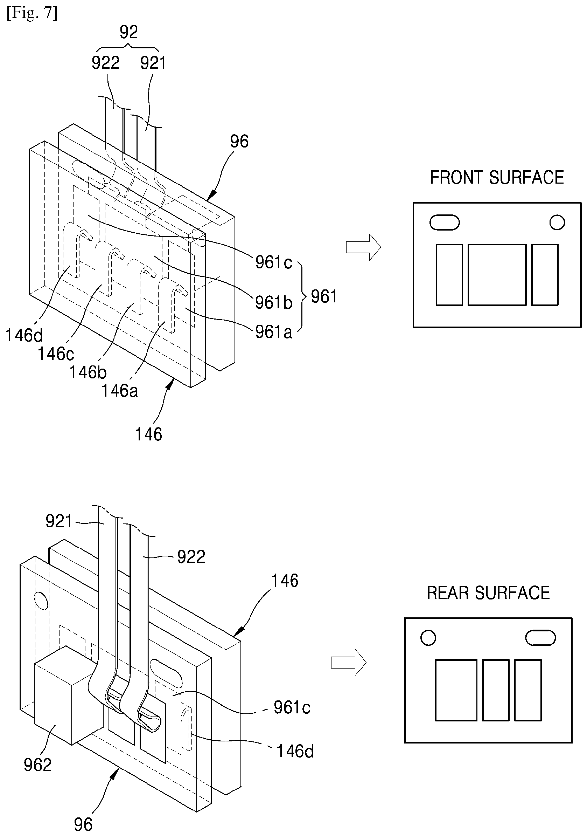

FIG. 4 is a perspective view of an example of the toner refill cartridge 9. FIGS. 5A and 5B are views of the toner refill cartridge 9 accessing the toner refilling portion 10 from outside the main body 1 of the image forming apparatus through the communicating portion 8. FIG. 6 is a perspective view of an example of the toner refilling portion 10 equipped with the toner refill cartridge 9. FIG. 7 is a view for explaining an electrical connection between a connection interface 96 of the toner refill cartridge 9 and a first connector 146 of the toner refilling portion 10.

Referring to FIGS. 4 to 7, the toner refill cartridge 9 may be a syringe toner refill cartridge including a body 91 accommodating toner and having a toner discharge portion 940, and a plunger 93 which is movably coupled to the body 91 in a longitudinal direction A to push toner out of the body 91. The toner discharge portion 940 may be provided at a tip portion 91-3 of the body 91. A discharge shutter 95 may selectively open and close the toner discharge portion 940. A protruding portion 912 partially protruding outwardly may be provided at the tip portion 91-3 of the body 91.

The body 91 may include an outer body 91-1 and an inner body 91-2 located inside the outer body 91-1 and accommodating toner. The toner discharge portion 940 is provided in the inner body 91-2. The plunger 93 may be inserted into the inner body 91-2 and moved in the longitudinal direction A. The plunger 93 may be moved from an upper position Q1 to a lower position Q2. The discharge shutter 95 may be provided so as to be independently rotatable with respect to the tip portion 91-3 of the body 91. For example, as shown in FIG. 4, the discharge shutter 95 may be located in a closed position that blocks the toner discharge portion 940. Further, the discharge shutter 95 may be located at a discharge position where the discharge shutter 95 is rotated 180 degrees with respect to the body 91 to open the toner discharge portion 940. The discharge shutter 95 may be rotated with respect to a first rotation axis C1. The first rotation axis C1 may be, for example, a central axis of the cylindrical tip portion 91-3.

The toner refill cartridge 9 may include a toner injection completion signal generator 92 used for detecting completion of injection of toner. For example, referring to the example of FIG. 4, the toner injection completion signal generator 92 may include a pair of electrodes 921 and 922 provided between the outer body 91-1 and the inner body 91-2. The pair of electrodes 921 and 922 may be respectively connected to electrical contacts 961b and 961c. An electrical contact state of the pair of electrodes 921 and 922 may vary depending on a position of the plunger 93. The electrical contact state of the pair of electrodes 921 and 922 may change from a first state to a second state when the plunger 93 enters the lower position Q2. For example, the first state and the second state may be an electrical open state and an electrical short state, respectively, or vice versa. An operating lever 923 movable in the longitudinal direction A may be provided between the outer body 91-1 and the inner body 91-2 in order to change the electrical contact state of the pair of electrodes 921 and 922. The plunger 93 may include a pushing protrusion 931 which pushes the operating lever 923 when the plunger 93 enters the lower position Q2 to bring the pair of electrodes 921 and 922 into contact with or spaced from each other. A hooking member 924 provided on the operating lever 923 may be locked and fixed to a protruding portion formed on the body 91 until the plunger 93 reaches a certain position.

A connection interface 96 may be provided at the tip portion 91-3 of the body 91. When the toner refill cartridge 9 is mounted on the toner refilling portion 10, the connection interface 96 may be electrically connected to the main body 1 to transfer information of the toner refill cartridge 9 to the main body 1. In the example, the connection interface 96 may be electrically connected to the main body 1 via the first connector 146 provided in the toner refilling portion 10. The main body 1, for example, a controller provided in the main body 1, may determine whether or not the toner refill cartridge 9 is mounted depending on whether the controller is electrically connected to the connection interface 96, for example, whether the controller can communicate with the connection interface 96.

The connection interface 96 may include a circuit unit 962 for managing information of the toner refill cartridge 9 and an electrical contact portion 961 for connection with the main body 1. The circuit unit 962 may be a customer replaceable unit monitor (CRUM) including a processor for performing at least one of authentication and/or encrypted data communication with the main body 1. The circuit unit 962 may further include a memory. The memory may store various types of information for the toner refill cartridge 9. For example, information about a manufacturer, information about manufacturing date and time, unique information such as serial number, model name, and the like, various programs, digital signature information, and a usage state (e.g., how many sheets have been printed so far, how many remaining sheets can be printed, and how much toner is remaining) may be stored in the memory. In addition, information about a lifetime of the toner refill cartridge 9, setup menu, and the like may be stored in the memory. In addition, the circuit unit 962 may include functional blocks capable of performing various functions for communication authentication, encryption, and the like with the main body 1. The circuit unit 962 may be implemented in the form of a chip including a processor and/or a memory, or a printed circuit board assembly (PBA) in which circuit elements for implementing chips and various functional blocks are mounted.

The electrical contact portion 961 may have various forms such as a conductive pattern, a modular jack, a resilient terminal, and the like, which may be electrically connected to the main body 1. The electrical contact portion 961 of the example shown in FIG. 4 is a conductive pattern. The electrical contact portion 961 may be exposed to outside the body 91 through an opening 912-1 provided in the protruding portion 912.

For example, the electrical contact portion 961 may have three electrical contacts 961a, 961b, and 961c. The first electrical contact 961a may be for transmitting information stored in the memory of the circuit unit 962 to the main body 1 of the image forming apparatus. The second electrical contact 961b may be for transmitting a signal regarding whether or not the toner refill cartridge 9 is mounted on the toner refilling portion 10 to the main body 1 of the image forming apparatus. The third electrical contact 961c may be for transmitting a toner injection completion signal or a removal request signal of the toner refill cartridge 9 to the main body 1 of the image forming apparatus.

As shown in FIGS. 5A and 5B, the toner refill cartridge 9 may be mounted on the toner refilling portion 10 through the communicating portion 8 from the outer surface of the main body 1 of the image forming apparatus. FIG. 5A is a front view of the toner refill cartridge 9 when the toner refill cartridge 9 accesses the communicating portion 8. FIG. 5B is a rear view of the toner refill cartridge 9 when the toner refill cartridge 9 accesses the communicating portion 8. When the toner refill cartridge 9 is inserted into the communicating portion 8 from above the main body 1, the toner refill cartridge 9 may be mounted on the toner refilling portion 10 as shown in FIG. 6. When the plunger 93 of the toner refill cartridge 9 is pushed in the longitudinal direction A of the body 91 in a state in which the toner refill cartridge 9 is mounted on the toner refilling portion 10, toner accommodated in the body 91 may be discharged through the toner discharge portion 940 and supplied to the toner accommodating portion 230 of the development cartridge 2 through the toner refilling portion 10. The toner refill cartridge 9 may be removed from the communicating portion 8 after completion of the toner injection.

When the toner refill cartridge 9 is mounted on the toner refilling portion 10 of the image forming apparatus, the connection interface 96 of the toner refill cartridge 9 is electrically connected to the first connector 146 located at a certain portion of the toner refilling portion 10. The connection interface 96 of the toner refill cartridge 9 may be electrically connected to the main body 1, for example, a controller provided in the main body 1 through the first connector 146 and a second connector 127 provided in the toner refilling portion 10. When the toner refill cartridge 9 is mounted on a mounting portion 11 through the insertion portion of an upper body 13, the first connector 146 may be directly connected to the electrical contact portion 961 of the connection interface 96. The first connector 146 may be connected to the second connector 127 by a flexible cable and the second connector 127 may be electrically connected to a controller provided on the main body 1.

Referring to FIGS. 6 and 7, the electrical contact portion 961 including the three electrical contacts 961a, 961b, and 961c may be provided on a front surface of the connection interface 96 and the circuit unit 962 including a memory for storing information about the toner refill cartridge 9 may be implemented on a rear surface of the connection interface 96. The first connector 146 may include four electrical contacts 146a, 146b, 146c, and 146d. The four electrical contacts 146a, 146b, 146c, and 146d of the first connector 146 may correspond to the three electrical contacts 961a, 961b, and 961c of the connection interface 96. For example, the first electrical contact 961a of the connection interface 96 may be electrically connected to the first electrical contact 146a of the first connector 146. The electrical contact 961b of the connection interface 96 may be electrically connected to the second electrical contact 146b and/or the third electrical contact 146c of the first connector 146. The third electrical contact 961c of the connection interface 96 may be electrically connected to the fourth electrical contact 146d of the first connector 146. The four electrical contacts 146a, 146b, 146c, and 146d may be electrically connected to the mounting portion 11, for example, the second connector 127 provided on a lower body 12 by a flexible cable. Thus, stable electrical connection between the first connector 146 and the second connector 127 may be maintained. The second connector 127 may include an electrical contact portion 126, and the electrical contact portion 126 may include four electrical contacts 126a, 126b, 126c, and 126d. The four electrical contacts 146a, 146b, 146c, and 146d of the first connector 146 may be electrically connected to the four electrical contacts 126a, 126b, 126c, and 126d of the second connector 127 by a flexible cable, respectively. As a result, when the toner refill cartridge 9 is mounted on the mounting portion 11, the second connector 127 may be electrically connected to the connection interface 96 of the toner refill cartridge 9 through the first connector 146 of the toner refilling portion 10.

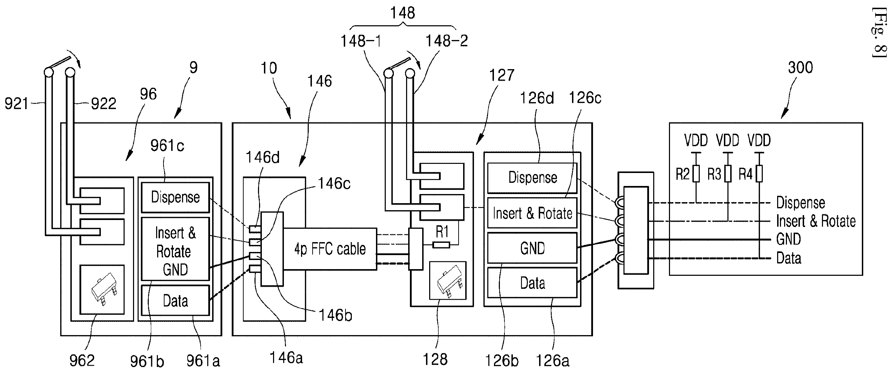

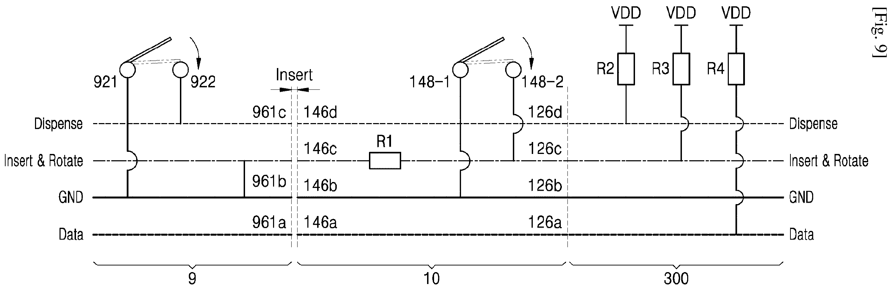

FIG. 8 is a view for explaining a connection structure between the toner refill cartridge 9, the toner refilling portion 10 in the development cartridge 2, and a controller 300. FIG. 9 is a view for explaining information transmission between the toner refill cartridge 9, the toner refilling portion 10, and the controller 300 when the toner refill cartridge 9 is mounted on the toner refilling portion 10 in the development cartridge 2.

Referring to FIGS. 8 and 9, the connection structure and operation between an image forming apparatus and the toner refill cartridge 9 connected to the main body 1 of the image forming apparatus through an interface between the development cartridge 2 and the main body 1 can be seen. The development cartridge 2 and the toner refill cartridge 9 are consumables removable from the image forming apparatus, and the toner refilling portion 10 in the development cartridge 2 may utilize the same interface as that of the development cartridge 2 to connect the development cartridge 2 and the toner refill cartridge 9 to the main body 1 of the image forming apparatus.

The image forming apparatus may include the main body 1, the development cartridge 2 removable from the main body 1, the toner refilling portion 10 in the development cartridge 2, and the controller 300. The development cartridge 2 supplies toner accommodated in the toner accommodating portion 230 to an electrostatic latent image formed on a photoconductor to form a toner image, the development cartridge 2 being removable from the main body 1. The toner refilling portion 10 may be in the development cartridge 2, and the toner refill cartridge 9 for refilling toner in the toner accommodating portion 230 may be mounted on the toner refilling portion 10. The controller 300 controls operations of the image forming apparatus based on a connection between the development cartridge 2 mounted on the main body 1 and the toner refill cartridge 9 mounted on the toner refilling portion 10. The toner refilling portion 10 may connect the toner refill cartridge 9 mounted on the toner refilling portion 10 to the main body 1 through the interface between the development cartridge 2 and the main body 1. The toner refilling portion 10 may be formed integrally with the development cartridge 2.

The toner refilling portion 10 includes the first connector 146 electrically connected to the toner refill cartridge 9 mounted on the toner refilling portion 10 and the second connector 127 electrically connected to the controller 300 provided in the main body 1. The second connector 127 includes a circuit unit 128 for managing information about the development cartridge 2 and may transmit information about the toner refill cartridge 9 obtained through the first connector 146 and information about the development cartridge 2 obtained from the circuit unit 128 to the controller 300.

As shown in FIG. 8, the first connector 146 and the second connector 127 may be connected to each other by a flexible flat cable. The first connector 146 and the second connector 127 connected by the flexible flat cable may be provided as an integrated assembly in the toner refilling portion in the toner refilling portion 10. The circuit unit 128 may be arranged on a surface opposite to a contact surface of the second connector 127 on which the electrical contact portion 126 electrically connected to the main body 1 is provided. The four electrical contacts 146a, 146b, 146c, and 146d provided in the first connector 146 may be connected to the four electrical contacts 126a, 126b, 126c, and 126d provided in the second connector 127, respectively.

The toner refilling portion 10 may be electrically connected to the toner refill cartridge 9 mounted on the toner refilling portion 10 and the main body 1 and may transmit the information about the toner refill cartridge 9 and the information about the development cartridge 2 to the controller 300 through the interface between the development cartridge 2 and the main body 1. The information about the toner refill cartridge 9 may include information for authentication of the toner refill cartridge 9 and the information about the development cartridge 2 may include information for authentication of the development cartridge 2.

The controller 300 may be connected to the toner refill cartridge 9 through the second connector 127 provided in the toner refilling portion 10 and the first connector 146. The controller 300 may control operations of the image forming apparatus based on signals or information received through the plurality of electrical contacts 126a, 126b, 126c, and 126d provided in the second connector 127.

Referring to FIGS. 8 and 9, the image forming apparatus has an electrical structure for detecting whether the toner refill cartridge 9 is mounted on the toner refilling portion 10. For example, the first connector 146 of the toner refilling portion 10 may include the electrical contact 146c electrically connected to the electrical contact 961b provided in the connection interface 96 of the toner refill cartridge 9 when the toner refill cartridge 9 is mounted on the mounting portion 11 of the toner refilling portion 10, and the electrical contact 146c of the first connector 146 may be connected to the controller 300 through the electrical contact 126c of the second connector 127. The controller 300 may detect whether the electrical contact 961b of the connection interface 96 is electrically connected to the electrical contact 146c of the first connector 146 and the electrical contact 126c of the second connector 127, thereby detecting whether or not the toner refill cartridge 9 has been mounted on the toner refilling portion 10. For example, when the toner refill cartridge 9 is mounted on the toner refilling portion 10, the electrical contact 961b of the connection interface 96 may be electrically connected to the electrical contact 126c of the second connector 127 through the electrical contact 146c of the first connector 146.

Whether or not the toner refill cartridge 9 is mounted on the toner refilling portion 10, that is, whether or not the connection interface 96 is connected to the first connector 146 may be determined by a circuit including a reference voltage VDD and two resistors R1 and R3. For example, when the toner refill cartridge 9 is not mounted on the toner refilling portion 10, no current flows through a circuit passing through the electrical contact 126c of the second connector 127, so that the reference voltage VDD, for example, 3.3 V, is applied to a first input port of the controller 300 connected to the electrical contact 126c of the second connector 127. Meanwhile, when the toner refill cartridge 9 is mounted on the toner refilling portion 10, the circuit passing through the electrical contact 126c of the second connector 127 may be a circuit in which the resistor R1 and the resistor R3 are connected in parallel to each other. When resistance values of the resistors R1 and R3 are identical, for example, a voltage of 1.65 V may be applied to the first input port of the controller 300. In other words, the controller 300 may detect whether or not the toner refill cartridge 9 is mounted on the toner refilling portion 10 based on a change in a voltage flowing through the second connector 127 depending on whether the toner refill cartridge 9 is mounted on the toner refilling portion 10 with respect to the reference voltage VDD applied to the controller 300, and may control the image forming apparatus according to a result of the detection.

When the toner refill cartridge 9 is mounted on the toner refilling portion 10, the circuit unit 962 provided in the connection interface 96 of the toner refill cartridge 9 may be connected to a data input port of the controller 300 through the electrical contact 961a of the connection interface 96, the electrical contact 146a of the first connector 146, and the electrical contact 126a of the second connector 127. The controller 300 may read information about the toner refill cartridge 9 from the circuit unit 962 provided in the connection interface 96 of the toner refill cartridge 9. The information about the toner refill cartridge 9 may include information for authentication of the toner refill cartridge 9. Meanwhile, when the development cartridge 2 is mounted on the main body 1 of the image forming apparatus, the circuit unit 128 provided in the second connector 127 of the toner refilling portion 10 may be connected to the data input port of the controller 300 through the electrical contact 126a of the second connector 127. The controller 300 may read information about the development cartridge 2 from the circuit unit 128 provided in the second connector 127 of the toner refilling portion 10. The information about the development cartridge 2 may include information for authentication of the development cartridge 2. Therefore, the controller 300 may receive the information about the toner refill cartridge 9 and the information about the development cartridge 2 through the interface between the development cartridge 2 and the main body 1.

Meanwhile, the toner refilling portion 10 includes a rotation detection sensor 148 for detecting that the toner refill cartridge 9 mounted on the toner refilling portion 10 enters a certain position depending on the rotation of the toner refill cartridge 9. The rotation detecting sensor 148 may include a pair of electrodes 148-1 and 148-2 whose electrical connection state changes depending on a result of the rotation detection of the toner refill cartridge 9. The toner refilling portion 10 transmits whether or not the mounted toner refill cartridge 9 has reached a certain position by rotation to the controller 300 through the second connector 127, based on a result of the detection of the toner refill cartridge 9.

For example, the rotation detection sensor 148 may change an electrical contact state of the pair of electrodes 148-1 and 148-2 when an inlet shutter (not shown) provided in the mounting portion 11 of the toner refilling portion 10 enters a certain position as the inlet shutter rotates in conjunction with the rotation of the toner refill cartridge 9. One of the pair of electrodes 148-1 and 148-2 may be a fixed electrode and the other electrode may be an elastic electrode that can be elastically contacted/separated to/from the fixed electrode. The pair of electrodes 148-1 and 148-2 may be connected to the controller 300 through the electrical contact 126c provided in the second connector 127. The electrical contact state of the pair of electrodes 148-1 and 148-2 may change from a first state to a second state when the inlet shutter (not shown) rotating in conjunction with the rotation of the toner refill cartridge 9 mounted on the toner refilling portion 10 enters a certain position. The first state and the second state may be an electrical open state and an electrical short state, respectively, or vice versa.

As described above, when a reference voltage applied to the controller 300 is 3.3 V and resistance values of the resistors R1 and R3 are identical and when the toner refill cartridge 9 is mounted on the toner refilling portion 10, a voltage of 1.65 V may be applied to the controller 300 by the voltage flowing through the second connector 127. Here, when the toner refill cartridge 9 mounted on the toner refilling portion 10 rotates, the electrical contact state of the pair of electrodes 148-1 and 148-2 provided in the toner refilling portion 10 is changed from the electrical open state to the electrical short state and a voltage of 0 V may be applied to the first input port of the controller 300. Accordingly, the controller 300 may detect whether or not the toner refill cartridge 9 rotates based on the change in the voltage flowing through the second connector 127 depending on the rotation of the toner refill cartridge 9 with respect to the reference voltage VDD applied to the controller 300, and may control the image forming apparatus according to a result of the detection.

When the toner refill cartridge 9 is rotated to allow toner contained in the toner refill cartridge 9 to be injected into the toner accommodating portion 230 of the image forming apparatus, a user may push the plunger 93 to refill toner into the toner accommodating portion 230 through the toner refilling portion 10. Completion of the toner injection may be detected by the toner injection completion signal generator 92. When the plunger 93 enters the lower position Q2, the pushing protrusion 931 may push the operating lever 923 to bring the pair of electrodes 921 and 922 into contact with each other. One of the pair of electrodes 921 and 922 may be a fixed electrode and the other electrode may be an elastic electrode that can be elastically contacted/separated to/from the fixed electrode. Accordingly, 0 V may be applied to a second input port of the controller 300 to which the reference voltage of 3.3 V is applied until toner injection is completed. That is, 0 V may be applied to both the first input port and the second input port of the controller 300. Accordingly, the controller 300 may detect toner injection completion of the toner refill cartridge 9 based on the change in the voltage flowing through the second connector 127 depending on whether or not the toner injection of the toner refill cartridge 9 is completed with respect to the reference voltage VDD applied to the controller 300, and may control the image forming apparatus according to a result of the detection.

In order to remove the toner refill cartridge 9, the toner refill cartridge 9 may be rotated in a direction opposite to a direction in which the toner refill cartridge 9 is rotated after being mounted on the toner refilling portion 10. Accordingly, the inlet shutter (not shown) rotated together with the rotation of the toner refill cartridge 9 may be returned to its original position. A voltage of 1.65 V instead a voltage of 0 V may be applied to the first input port of the controller 300 again. When the toner injection of the toner refill cartridge 9 is completed and the toner refill cartridge 9 is unlocked by rotating the toner refill cartridge 9 in a direction opposite to a direction in which the toner refill cartridge 9 is rotated after being mounted on the toner refilling portion 10, a user may separate the toner refill cartridge 9 from the toner refilling portion 10. Accordingly, a signal of 3.3 V may be input to the first input port of the controller 300 again.

It should be understood that the disclosure described herein should be considered in a descriptive sense and not for purposes of limitation. Descriptions of features within each example should be considered as available for other similar features in other examples. Therefore, the scope of the disclosure is defined not by the detailed description of the disclosure but by the appended claims.

## Claims

1. An image forming apparatus, comprising:
a main body (1) to mount a removable development cartridge (2) that is to supply toner accommodated in a toner accommodating portion (230) of the development cartridge (2) to an electrostatic latent image formed on a photoconductor of the image forming apparatus to form a toner image;
a communicating portion (8) formed in an exterior surface of the main body (1) to receive a toner refill cartridge (9), the toner refill cartridge (9) connectable to a toner refilling portion (10) in the development cartridge (2) to refill toner in the toner accommodating portion (230) via the communicating portion (8) when the development cartridge (2) is mounted in the main body (1) and the toner refill cartridge (9) is received by the communicating portion (8), wherein the toner refilling portion (10) includes:
a first connector (146) to be electrically connected to the toner refill cartridge (9) when the toner refill cartridge (9) is connected to the toner refilling portion (10) via the communicating portion (8),
a second connector (127) including a circuit unit (962) to manage information about the development cartridge (2), to transmit information about the toner refill cartridge (9) obtained through the first connector (146) to the controller (300), and to transmit information about the development cartridge (2) obtained from the circuit unit (962) to the controller (300), and
a rotation detection sensor (148) to detect whether the toner refill cartridge (9) enters the specified position based on a rotation of the toner refill cartridge (9), when the toner refill cartridge (9) is connected to the toner refilling portion (10); and
a controller (300) to control operations of the image forming apparatus based on a connection status between the development cartridge (2) and the toner refill cartridge (9) and to detect whether the toner refill cartridge (9) rotates when the toner refill cartridge (9) is connected to the toner refilling portion (10) based on a change in a voltage flowing through the second connector (127) and a reference voltage applied to the controller (300), and to control the image forming apparatus according to a result of the detection.

2. The image forming apparatus of claim 1, wherein the first connector (146) and the second connector (127) are connected to each other by a flexible flat cable.

3. The image forming apparatus of claim 2, wherein the first connector (146) and the second connector (127) are provided as an integrated assembly in the toner refilling portion (10).

4. The image forming apparatus of claim 1, wherein the circuit unit (962) is provided on a surface of the second connector (127) opposite to a contact surface of the second connector (127) on which an electrical contact portion (961) electrically connected to the main body (1) is provided.

5. The image forming apparatus of claim 1, wherein a plurality of electrical contacts (146a-d) provided in the first connector (146) are connected to a plurality of electrical contacts (126a-d) provided in the second connector (127), respectively.

6. The image forming apparatus of claim 1, wherein the controller (300) is to detect whether the toner refill cartridge (9) is connected to the toner refilling portion (10) based on a change in a voltage flowing through the second connector (127) and a reference voltage applied to the controller (300), and to control the image forming apparatus according to a result of the detection.

7. The image forming apparatus of claim 1, wherein the controller (300) is to detect toner injection completion of the toner refill cartridge (9) based on a change in a voltage flowing through the second connector (127) and a reference voltage applied to the controller (300), and to control the image forming apparatus according to a result of the detection.

8. The image forming apparatus of claim 1, wherein
when the development cartridge (2) is mounted in the main body (1) and the toner refill cartridge (9) is connected to the toner refilling portion (10) in the development cartridge (2), the toner refilling portion (10) is electrically connected to the toner refill cartridge (9) and the controller (300), and
the controller (300) is to receive information about the toner refill cartridge (9) and information about the development cartridge (2) from the development cartridge (2).

9. The image forming apparatus of claim 8, wherein the information about the toner refill cartridge (9) includes information for authentication of the toner refill cartridge (9) and the information about the development cartridge (2) includes information for authentication of the development cartridge (2).

10. The image forming apparatus of claim 1, wherein the toner refilling portion (10) is formed integrally with the development cartridge (2).

11. A development cartridge (2) mountable in an image forming apparatus, the development cartridge (2) comprising:
a toner accommodating portion (230) to accommodate toner; and
a toner refilling portion (10), connectable to a toner refill cartridge (9) via a communicating portion (8) formed in an exterior surface of the main body (1) of the image forming apparatus when the development cartridge (2) is mounted in the image forming apparatus, to refill toner in the toner accommodating portion (230), the toner refilling portion (10) to detect whether the toner refill cartridge (9) has reached the specified position based on a rotation of the toner refill cartridge (9) when the toner refill cartridge (9) is connected to the toner refilling portion (10), the toner refilling portion (10) including:
a first connector to be electrically connected to the toner refill cartridge (9) when the toner refill cartridge (9) is connected to the toner refilling portion (10),
a second connector (127) including a circuit unit (962) to transmit information about the toner refill cartridge (9) obtained through the first connector (146) to a controller (300) of the image forming apparatus, and to transmit information about the development cartridge (2) obtained from the circuit unit (962) to the controller (300), and
a rotation detection sensor (148) to detect whether the toner refill cartridge (9) enters the specified position based on a rotation of the toner refill cartridge (9), when the toner refill cartridge (9) is connected to the toner refilling portion (10),
wherein the toner refilling portion (10) is to transmit whether the toner refill cartridge (9) has reached the specified position to the controller (300) via the second connector (127), based on a result of the detection.

12. The development cartridge (2) of claim 11, wherein the toner refilling portion (10) further includes a flexible flat cable to connect the first connector (146) and the second connector (127).

## Patentansprüche

1. Bilderzeugungsvorrichtung, die umfasst:
einen Grundkörper (1), um eine abnehmbare Entwicklungskartusche (2) anzubringen, die dazu dient, Toner, der in einem Toneraufnahmeteil (230) der Entwicklungskartusche (2) aufgenommen ist, einem elektrostatischen latenten Bild, das auf einem Fotoleiter der Bilderzeugungsvorrichtung ausgebildet ist, zuzuführen, um ein Tonerbild auszubilden;
einen Verbindungsteil (8), der in einer Außenoberfläche des Grundkörpers (1) ausgebildet ist, um eine Tonernachfüllkartusche (9) aufzunehmen, wobei die Tonernachfüllkartusche (9) mit einem Tonernachfüllungsteil (10) in der Entwicklungskartusche (2) verbindbar ist, um Toner in dem Toneraufnahmeteil (230) mithilfe des Verbindungsteils (8) nachzufüllen, wenn die Entwicklungskartusche (2) in dem Grundkörper (1) angebracht ist und die Tonernachfüllkartusche (9) mittels des Verbindungsteils (8) empfangen wird, wobei der Tonernachfüllungsteil (10) einschließt:
einen ersten Verbinder (146), der dazu dient, mit der Tonernachfüllkartusche (9) elektrisch verbunden zu werden, wenn die Tonernachfüllkartusche (9) mithilfe des Verbindungsteils (8) mit dem Tonernachfüllungsteil (10) verbunden ist,
einen zweiten Verbinder (127), einschließlich einer Schaltungseinheit (962), um Informationen über die Entwicklungskartusche (2) zu verwalten, um Informationen über die Tonernachfüllkartusche (9), die durch den ersten Verbinder (146) erhalten werden, an die Steuerung (300) zu übertragen, und um Informationen über die Entwicklungskartusche (2), die von der Schaltungseinheit (962) erhalten werden, an die Steuerung (300) zu übertragen, und
einen Drehungserfassungssensor (148), um zu erfassen, ob die Tonernachfüllkartusche (9) in die spezifizierte Position eintritt, auf der Basis einer Drehung der Tonernachfüllkartusche (9), wenn die Tonernachfüllkartusche (9) mit dem Tonernachfüllungsteil (10) verbunden ist; und
eine Steuerung (300), um Vorgänge der Bilderzeugungsvorrichtung auf der Basis eines Verbindungsstatus zwischen der Entwicklungskartusche (2) und der Tonernachfüllkartusche (9) zu erfassen, und um zu erfassen, ob sich die Tonernachfüllkartusche (9) dreht, wenn die Tonernachfüllkartusche (9) mit dem Tonernachfüllungsteil (10) verbunden ist, auf der Basis einer Änderung einer durch den zweiten Verbinder (127) fließenden Spannung und einer Referenzspannung, die an die Steuerung (300) angelegt ist, und um die Bilderzeugungsvorrichtung gemäß einem Ergebnis der Erfassung zu steuern.

2. Bilderzeugungsvorrichtung nach Anspruch 1, wobei der erste Verbinder (146) und der zweite Verbinder (127) mittels eines flexiblen Flachkabels miteinander verbunden sind.

3. Bilderzeugungsvorrichtung nach Anspruch 2, wobei der erste Verbinder (146) und der zweite Verbinder (127) als eine integrierte Baugruppe in dem Tonernachfüllungsteil (10) bereitgestellt sind.

4. Bilderzeugungsvorrichtung nach Anspruch 1, wobei die Schaltungseinheit (962) auf einer Oberfläche des zweiten Verbinders (127) gegenüberliegend einer Kontaktoberfläche des zweiten Verbinders (127) bereitgestellt ist, auf der ein elektrischer Kontaktteil (961), der mit dem Grundkörper (1) elektrisch verbunden ist, bereitgestellt ist.

5. Bilderzeugungsvorrichtung nach Anspruch 1, wobei eine Vielzahl von elektrischen Kontakten (146a-d), die in dem ersten Verbinder (146) bereitgestellt sind, jeweils mit einer Vielzahl von elektrischen Kontakten (126a-d), die in dem zweiten Verbinder (127) bereitgestellt sind, verbunden sind.

6. Bilderzeugungsvorrichtung nach Anspruch 1, wobei die Steuerung (300) dazu dient, zu erfassen, ob die Tonernachfüllkartusche (9) mit dem Tonernachfüllungsteil (10) verbunden ist, auf der Basis einer Änderung einer durch den zweiten Verbinder (127) fließenden Spannung und einer Referenzspannung, die an die Steuerung (300) angelegt ist, und um die Bilderzeugungsvorrichtung gemäß einem Ergebnis der Erfassung zu steuern.

7. Bilderzeugungsvorrichtung nach Anspruch 1, wobei die Steuerung (300) dazu dient, einen Tonereinspritzabschluss der Tonernachfüllkartusche (9) auf der Basis einer Änderung einer durch den zweiten Verbinder (127) fließenden Spannung und einer Referenzspannung, die an die Steuerung (300) angelegt ist, zu erfassen und um die Bilderzeugungsvorrichtung gemäß einem Ergebnis der Erfassung zu steuern.

8. Bilderzeugungsvorrichtung nach Anspruch 1, wobei,
wenn die Entwicklungskartusche (2) in dem Grundkörper (1) angebracht ist und die Tonernachfüllkartusche (9) mit dem Tonernachfüllungsteil (10) in der Entwicklungskartusche (2) verbunden ist, der Tonernachfüllungsteil (10) mit der Tonernachfüllkartusche (9) und der Steuerung (300) elektrisch verbunden ist, und
die Steuerung (300) dazu dient, Informationen über die Tonernachfüllkartusche (9) und Informationen über die Entwicklungskartusche (2) von der Entwicklungskartusche (2) zu empfangen.

9. Bilderzeugungsvorrichtung nach Anspruch 8, wobei die Informationen über die Tonernachfüllkartusche (9) Informationen für eine Authentifizierung der Tonernachfüllkartusche (9) einschließen und die Informationen über die Entwicklungskartusche (2) Informationen für eine Authentifizierung der Entwicklungskartusche (2) einschließen.

10. Bilderzeugungsvorrichtung nach Anspruch 1, wobei der Tonernachfüllungsteil (10) integral mit der Entwicklungskartusche (2) ausgebildet ist.

11. Entwicklungskartusche (2), die in einer Bilderzeugungsvorrichtung anbringbar ist, wobei die Entwicklungskartusche (2) umfasst:
einen Toneraufnahmeteil (230), um Toner aufzunehmen, und
einen Tonernachfüllungsteil (10), der mit einer Tonernachfüllkartusche (9) mithilfe eines Verbindungsteils (8) verbindbar ist, der in einer Außenoberfläche des Grundkörpers (1) der Bilderzeugungsvorrichtung ausgebildet ist, wenn die Entwicklungskartusche (2) in der Bilderzeugungsvorrichtung angebracht ist, um Toner in dem Toneraufnahmeteil (230) nachzufüllen, wobei der Tonernachfüllungsteil (10) erfasst, ob die Tonernachfüllkartusche (9) die spezifizierte Position erreicht hat, auf der Basis einer Drehung der Tonernachfüllkartusche (9), wenn die Tonernachfüllkartusche (9) mit dem Tonernachfüllungsteil (10) verbunden ist, wobei der Tonernachfüllungsteil (10) einschließt:
einen ersten Verbinder, der dazu dient, mit der Tonernachfüllkartusche (9) elektrisch verbunden zu werden, wenn die Tonernachfüllkartusche (9) mit dem Tonernachfüllungsteil (10) verbunden ist,
einen zweiten Verbinder (127), einschließlich einer Schaltungseinheit (962), um Informationen über die Tonernachfüllkartusche (9), die durch den ersten Verbinder (146) erhalten werden, an eine Steuerung (300) der Bilderzeugungsvorrichtung zu übertragen, und um Informationen über die Entwicklungskartusche (2), die von der Schaltungseinheit (962) erhalten werden, an die Steuerung (300) zu übertragen, und
einen Drehungserfassungssensor (148), um zu erfassen, ob die Tonernachfüllkartusche (9) in die spezifizierte Position eintritt, auf der Basis einer Drehung der Tonernachfüllkartusche (9), wenn die Tonernachfüllkartusche (9) mit dem Tonernachfüllungsteil (10) verbunden ist, wobei der Tonernachfüllungsteil (10) dazu dient, mithilfe des zweiten Verbinders (127), auf der Basis eines Ergebnisses der Erfassung, an die Steuerung (300) zu übertragen, ob die Tonernachfüllkartusche (9) die spezifizierte Position erreicht hat.

12. Entwicklungskartusche (2) nach Anspruch 11, wobei der Tonernachfüllungsteil (10) ferner ein flexibles Flachkabel einschließt, um den ersten Verbinder (146) und den zweiten Verbinder (127) zu verbinden.

## Revendications

1. Appareil de formation d'images, comprenant :
un corps principal (1) pour monter une cartouche de développement amovible (2) qui doit fournir de l'encre en poudre logée dans une partie de réception d'encre en poudre (230) de la cartouche de développement (2) à une image latente électrostatique formée sur un photoconducteur de l'appareil de formation d'images pour former une image révélé ;
une partie de communication (8) formée dans une surface extérieure du corps principal (1) pour recevoir une cartouche de recharge d'encre en poudre (9), la cartouche de recharge d'encre en poudre (9) pouvant être connectée à une partie de recharge d'encre en poudre (10) dans la cartouche de développement (2) pour recharger de l'encre en poudre dans la partie de réception d'encre en poudre (230) par l'intermédiaire de la partie de communication (8) lorsque la cartouche de développement (2) est montée dans le corps principal (1) et que la cartouche de recharge d'encre en poudre (9) est reçue par la partie de communication (8), dans lequel la partie de recharge d'encre en poudre (10) comporte :
un premier connecteur (146) à connecter électriquement à la cartouche de recharge d'encre en poudre (9) lorsque la cartouche de recharge d'encre en poudre (9) est connectée à la partie de recharge d'encre en poudre (10) par l'intermédiaire de la partie de communication (8),
un second connecteur (127) comportant une unité de circuit (962) pour gérer des informations sur la cartouche de développement (2), pour transmettre des informations concernant la cartouche de recharge d'encre en poudre (9) obtenues par l'intermédiaire du premier connecteur (146) au dispositif de commande (300), et pour transmettre des informations concernant la cartouche de développement (2) obtenues à partir de l'unité de circuit (962) au dispositif de commande (300), et
un capteur de détection de rotation (148) pour détecter si la cartouche de recharge d'encre en poudre (9) entre dans la position spécifiée sur la base d'une rotation de la cartouche de recharge d'encre en poudre (9), lorsque la cartouche de recharge d'encre en poudre (9) est connectée à la partie de recharge d'encre en poudre (10) ; et
un dispositif de commande (300) pour commander des opérations de l'appareil de formation d'images sur la base d'un état de connexion entre la cartouche de développement (2) et la cartouche de recharge d'encre en poudre (9) et pour détecter si la cartouche de recharge d'encre en poudre (9) effectue une rotation lorsque la cartouche de recharge d'encre en poudre (9) est connectée à la partie de recharge d'encre en poudre (10) sur la base d'un changement dans une tension circulant à travers le second connecteur (127) et d'une tension de référence appliquée au dispositif de commande (300), et pour commander l'appareil de formation d'images en fonction d'un résultat de la détection.

2. Appareil de formation d'images selon la revendication 1, dans lequel le premier connecteur (146) et le second connecteur (127) sont connectés l'un à l'autre par un câble plat flexible.

3. Appareil de formation d'images selon la revendication 2, dans lequel le premier connecteur (146) et le second connecteur (127) sont fournis en tant qu'ensemble intégré dans la partie de recharge d'encre en poudre (10).

4. Appareil de formation d'images selon la revendication 1, dans lequel l'unité de circuit (962) est fournie sur une surface du second connecteur (127) opposée à une surface de contact du second connecteur (127) sur laquelle une partie de contact électrique (961) connectée électriquement au corps principal (1) est fournie.

5. Appareil de formation d'images selon la revendication 1, dans lequel une pluralité de contacts électriques (146a-d) fournie dans le premier connecteur (146) est connectée à une pluralité de contacts électriques (126a-d) fournie dans le second connecteur (127), respectivement.

6. Appareil de formation d'images selon la revendication 1, dans lequel le dispositif de commande (300) doit détecter si la cartouche de recharge d'encre en poudre (9) est connectée à la partie de recharge d'encre en poudre (10) sur la base d'un changement dans une tension circulant à travers le second connecteur (127) et d'une tension de référence appliquée au dispositif de commande (300), et commander l'appareil de formation d'images en fonction d'un résultat de la détection.

7. Appareil de formation d'images selon la revendication 1, dans lequel le dispositif de commande (300) doit détecter l'achèvement de l'injection d'encre en poudre de la cartouche de recharge d'encre en poudre (9) sur la base d'un changement dans une tension circulant à travers le second connecteur (127) et d'une tension de référence appliquée au dispositif de commande (300), et commander l'appareil de formation d'images en fonction d'un résultat de la détection.

8. Appareil de formation d'images selon la revendication 1, dans lequel
lorsque la cartouche de développement (2) est montée dans le corps principal (1) et que la cartouche de recharge d'encre en poudre (9) est connectée à la partie de recharge d'encre en poudre (10) dans la cartouche de développement (2), la partie de recharge d'encre en poudre (10) est connectée électriquement à la cartouche de recharge d'encre en poudre (9) et au dispositif de commande (300), et
le dispositif de commande (300) doit recevoir des informations concernant la cartouche de recharge d'encre en poudre (9) et des informations concernant la cartouche de développement (2) à partir de la cartouche de développement (2).

9. Appareil de formation d'images selon la revendication 8, dans lequel les informations concernant la cartouche de recharge d'encre en poudre (9) comportent des informations pour l'authentification de la cartouche de recharge d'encre en poudre (9) et les informations concernant la cartouche de développement (2) comportent des informations pour l'authentification de la cartouche de développement (2).

10. Appareil de formation d'images selon la revendication 1, dans lequel la partie de recharge d'encre en poudre (10) fait partie intégrante de la cartouche de développement (2).

11. Cartouche de développement (2) pouvant être montée dans un appareil de formation d'images, la cartouche de développement (2) comprenant :
une partie de réception d'encre en poudre (230) destinée à recevoir de l'encre en poudre ; et
une partie de recharge d'encre en poudre (10), pouvant être connectée à une cartouche de recharge d'encre en poudre (9) par l'intermédiaire d'une partie de communication (8) formée dans une surface extérieure du corps principal (1) de l'appareil de formation d'images lorsque la cartouche de développement (2) est montée dans l'appareil de formation d'images, pour recharger de l'encre en poudre dans la partie de réception d'encre en poudre (230), la partie de recharge d'encre en poudre (10) permettant de détecter si la cartouche de recharge d'encre en poudre (9) a atteint la position spécifiée sur la base d'une rotation de la cartouche de recharge d'encre en poudre (9) lorsque la cartouche de recharge d'encre en poudre (9) est connectée à la partie de recharge d'encre en poudre (10), la partie de recharge d'encre en poudre (10) comportant :
un premier connecteur à connecter électriquement à la cartouche de recharge d'encre en poudre (9) lorsque la cartouche de recharge d'encre en poudre (9) est connectée à la partie de recharge d'encre en poudre (10),
un second connecteur (127) comportant une unité de circuit (962) pour transmettre des informations concernant la cartouche de recharge d'encre en poudre (9) obtenues par l'intermédiaire du premier connecteur (146) à un dispositif de commande (300) de l'appareil de formation d'images, et pour transmettre des informations concernant la cartouche de développement (2) obtenues à partir de l'unité de circuit (962) au dispositif de commande (300), et
un capteur de détection de rotation (148) pour détecter si la cartouche de recharge d'encre en poudre (9) entre dans la position spécifiée sur la base d'une rotation de la cartouche de recharge d'encre en poudre (9), lorsque la cartouche de recharge d'encre en poudre (9) est connectée à la partie de recharge d'encre en poudre (10), dans lequel la partie de recharge d'encre en poudre (10) doit indiquer si la cartouche de recharge d'encre en poudre (9) a atteint la position spécifiée au dispositif de commande (300) par l'intermédiaire du second connecteur (127), sur la base d'un résultat de la détection.

12. Cartouche de développement (2) selon la revendication 11, dans laquelle la partie de recharge d'encre en poudre (10) comporte en outre un câble plat flexible pour connecter le premier connecteur (146) et le second connecteur (127).
